(19) Europäisches Patentamt
European Patent Office
Office européen des brevets

(11) **EP 1 152 259 B1**

(12) **EUROPÄISCHE PATENTSCHRIFT**

(45) Veröffentlichungstag und Bekanntmachung des Hinweises auf die Patenterteilung:
**13.12.2006 Patentblatt 2006/50**

(51) Int Cl.:
*G01S 17/36* (2006.01)   *G01S 7/497* (2006.01)

(21) Anmeldenummer: **01110813.1**

(22) Anmeldetag: **04.05.2001**

(54) **Optischer Distanzsensor**

Optical rangefinder

Télémètre optique

(84) Benannte Vertragsstaaten:
**BE CH DE FR GB IT LI NL**

(30) Priorität: **06.05.2000 DE 10022054**

(43) Veröffentlichungstag der Anmeldung:
**07.11.2001 Patentblatt 2001/45**

(73) Patentinhaber: **Leuze electronic GmbH + Co. KG**
**73277 Owen/Teck (DE)**

(72) Erfinder:
• **Argast, Martin**
**72584 Hülben (DE)**

• **Schönhardt, Manfred**
**73252 Lenningen (DE)**
• **Haag, Roland**
**73278 Schlierbach (DE)**
• **Fauth, Siegfried**
**73230 Kirchheim/Teck (DE)**

(74) Vertreter: **Ruckh, Rainer Gerhard**
**Fabrikstrasse 18**
**73277 Owen/Teck (DE)**

(56) Entgegenhaltungen:
**WO-A-99/13293        DE-A- 4 303 804**
**DE-C- 4 027 990**

**Beschreibung**

Die Erfindung betrifft einen optischen Distanzsensor gemäß dem Anspruch 1.

Ein derartiger Distanzsensor ist aus der DE 43 03 804 C2 bekannt. Dieser Distanzsensor umfasst einen Sendelicht emittierenden Laser, dessen Sendelichtstrahl mit zwei vorgegebenen Modulationsfrequenzen amplitudenmoduliert ist, sowie einen Empfänger und einen Phasendetektor zur Ermittlung der Phasendifferenz des Sendelichtstrahls und des von einem Objekt reflektierten Empfangslichtstrahls. Der Phasendetektor umfasst im wesentlichen zwei phasenempfindliche Gleichrichter, welchen das Empfangssignal des Empfängers um 90° phasenversetzt zugeführt wird. Zur Bestimmung der Entfernung eines Objektes werden diese beiden Signale dividiert. Die Modulationen des Sendelichtstrahls erfolgen mit den jeweiligen Modulationsfrequenzen zeitlich getrennt. Zur Ermittlung der Distanz eines Objekts zur Einrichtung wird das Objekt mit beiden Modulationsfrequenzen vermessen. Die Beträge der Modulationsfrequenzen sind teilerfremde Zahlen gleicher Größenordnung. Die Änderung der Modulationsfrequenz erfolgt innerhalb vorgegebener, an die Geschwindigkeit der Objekte relativ zur Einrichtung angepasster Intervalle.

Ein wesentlicher Nachteil dieser Vorrichtung besteht darin, dass die hohe Anforderung an die Phasenmessgenauigkeit einen hohen Schaltungsaufwand bedingt.

Insbesondere ist nachteilig, dass die Division der Ausgangssignale der phasenempfindlichen Gleichrichter einen hohen Zeitaufwand erfordert. Zudem ergibt sich ein hoher Schaltungsaufwand dadurch, dass den phasenempfindlichen Gleichrichtern das Empfangssignal zeitgleich zugeführt werden muss. Schließlich variiert entsprechend den Änderungen des Empfangssignals der Arbeitspunkt des Phasendetektors, wodurch Schaltspitzen erzeugt werden, die zu erheblichen Messfehlern führen können.

Aus der WO 99/13293 A1 ist ein gattungsgemäßer optischer Distanzsensor bekannt. Der dort beschriebene Distanzsensor arbeitet nach dem Phasenmessprinzip und weist einen Sender auf, dessen Sendelicht mittels eines Modulators moduliert wird. In einem Empfänger wird die laufzeitbedingte Phasenverschiebung des auftreffenden Empfangslichts zum Sendelicht ermittelt. Die Distanzmessung erfolgt in Bezug auf ein bestimmtes Target, wobei die Phasenverschiebung des Empfangslichts auf das vom Target kommende Signal referenziert wird.

Der Erfindung liegt die Aufgabe zugrunde, eine Vorrichtung der eingangs genannten Art zu schaffen, die mit geringem Schaltungsaufwand eine sichere Detektion von Objekten mit weitgehend beliebigen Oberflächen in einem großen Entfernungsbereich gewährleistet.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Bei dem erfindungsgemäßen Distanzsensor wird die Phasenverschiebung zwischen Sende- und Empfangslichtstrahlen auf einen vorgegebenen Wert geregelt.

Vorzugsweise ist zur Ermittlung der Phasendifferenz ein Synchrongleichrichter vorgesehen, welchem die Empfangssignale am Ausgang des Empfängers sowie die Ausgangssignale des den Sender modulierenden Oszillators oder eines Taktoszillators, dessen Frequenz im wesentlichen mit der Frequenz aus dem Sender modulierenden Oszillator übereinstimmt, zugeführt werden.

Die Phasenverschiebung zwischen Sende- und Empfangslichtstrahlen wird dann vorzugsweise auf einen Wert eingeregelt, bei welchem der Mittelwert des Ausgangssignals des Synchrongleichrichters zumindest näherungsweise den Wert null annimmt.

Die Distanzmessung erfolgt dann entweder durch eine Zeit- oder Frequenzmessung.

In einer ersten Ausführungsform ist zwischen dem Sender und dem Oszillator ein Verzögerungsglied angeordnet, dessen Verzögerungszeit zur Regelung der Phasenverschiebung einstellbar ist. Die so eingestellte Verzögerungszeit wird als Maß für die Objektdistanz ausgewertet.

In einer zweiten Ausführungsform ist der Sender durch den Oszillator mit einer festen Frequenz $f_2$ moduliert, während der Ausgang des Taktoszillators auf den Synchrongleichrichter geführt ist. Dabei ist die Frequenz $f_1$ des Taktoszillators zur Regelung der Phasenverschiebung einstellbar.

Durch Vergleich der Frequenzen $f_1$ und $f_2$ wird ein Maß für die Objektdistanz abgeleitet.

In einer dritten Ausführungsform ist die Frequenz des Oszillators zur Regelung der Phasenverschiebung veränderbar, wobei die so eingestellte Frequenz des Oszillators ein Maß für die Objektdistanz liefert.

Bei allen Ausführungsformen wird der Synchrongleichrichter bei einem gleichbleibenden Arbeitspunkt betrieben. Dadurch wird eine hohe Reproduzierbarkeit und Genauigkeit der Entfernungsmessung erhalten.

Weiterhin ist vorteilhaft, dass zur Durchführung der Distanzbestimmung keine zeitaufwendige Division durchgeführt werden muss.

Die Entfernungsmessung erfolgt durch Zeit- oder Frequenzmessungen, die mit geringem Schaltungsaufwand bewerkstelligt werden können.

Die Erfindung wird im nachstehenden anhand der Zeichnungen erläutert. Es zeigen:

Figur 1a: Schnitt der Seitenansicht des Aufbaus der optischen Komponenten des erfindungsgemäßen Distanzsensors.

Figur 1b: Schnitt der Draufsicht der Darstellung gemäß Figur 1 a.

Figur 1c: Schnitt der Rückansicht der Darstellung gemäß Figur 1 a.

Figur 2: Blockschaltbild eines ersten Ausfilhrungs-beispiels des erfindungsgemäßen Di-stanzsensors.

Figur 3: Impulsdiagramme der Signalamplituden von Komponenten des Distanzsensors gemäß Figur 2.

Figur 4: Blockschaltbild eines zweiten Ausführungsbeispiels des erfindungsgemäßen Distanzsensors.

Figur 5: Impulsdiagramme der Signalamplituden von Komponenten des Distanzsensors gemäß Figur 4.

Figur 6: Blockschaltbild eines dritten Ausführungsbeispiels des erfindungsgemäßen Distanzsensors.

Figur 7: Impulsdiagramme der Signalamplituden von Komponenten des Distanzsensors gemäß Figur 6.

Figur 8a: Distanzabhängigkeit der Verzögerungszeiten des Empfangssignals gegenüber dem Sendesignal für den Distanzsensor gemäß Figur 6.

Figur 8b,c: Distanzabhängigkeit der Frequenzen des Oszillators des Distanzsensors gemäß Figur 6 für verschiedene Distanzbereiche.

Figur 9: Blockschaltbild eines vierten Ausführungsbeispiels des erfindungsgemäßen Distanzsensors.

Figur 10: Impulsdiagramme der Signalamplituden von Komponenten des Distanzsensors gemäß Figur 9.

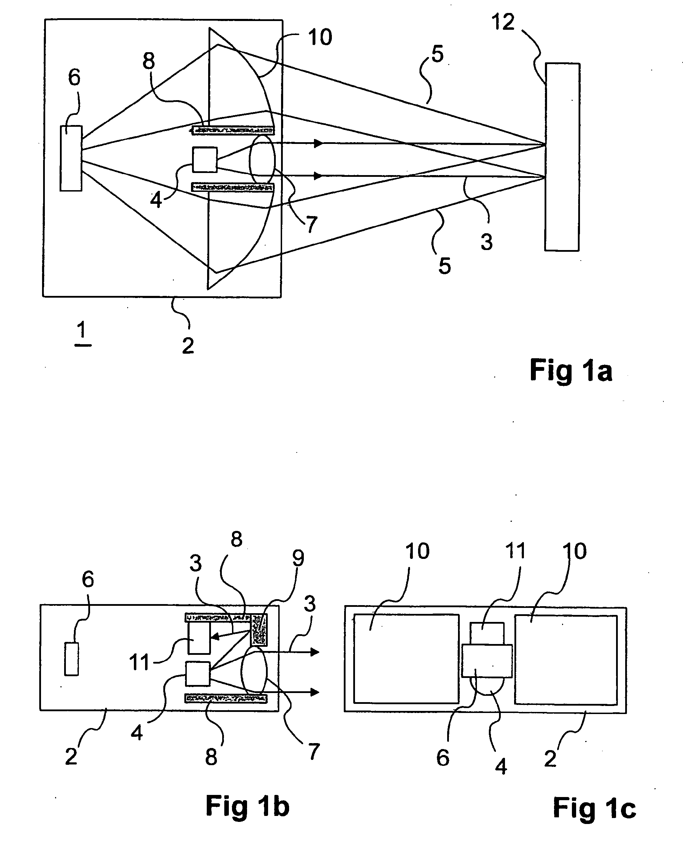

In den Figuren 1 a - c ist schematisch der Aufbau der optischen Komponenten des erfindungsgemäßen optischen Distanzsensors 1 dargestellt.

Der Distanzsensor 1 ist in einem Gehäuse 2 integriert und weist einen Sendelichtstrahlen 3 emittierenden Sender 4 sowie einen Empfangslichtstrahlen 5 empfangenden Empfänger 6 auf. Der Sender 4 ist von einer Leuchtdiode oder einer Laserdiode gebildet, der Empfänger 6 besteht aus einer Fotodiode.

Dem Sender 4 ist einer Sendeoptik 7 vorgeordnet, welche von einer Linse gebildet ist. Die Sendeoptik 7 ist in einer Fassung 8 mit einer Blende 9 gelagert. Diese Fassung 8 sitzt in einer zentralen Ausnehmung einer Empfangsoptik 10, die aus zwei Teillinsen besteht, die in der Frontwand des Gehäuses 2 gelagert ist. Neben dem Sender 4 ist ein Referenzempfänger 11 angeordnet. Der Referenzempfänger 11 besteht ebenfalls aus einer Fotodiode.

Der Hauptteil der Sendelichtstrahlen 3 ist durch die Sendeoptik 7 geführt und trifft auf ein Objekt 12, dessen Distanz bestimmt werden soll. Die vom Objekt 12 zurückreflektierten Empfangslichtstrahlen 5 werden über die Empfangsoptik 10 zum Empfänger 6 geführt.

Die Randstrahlen der Sendelichtstrahlen 3 treffen als Streulicht auf die Blende 9 und werden von dort zum Referenzempfänger 11 reflektiert.

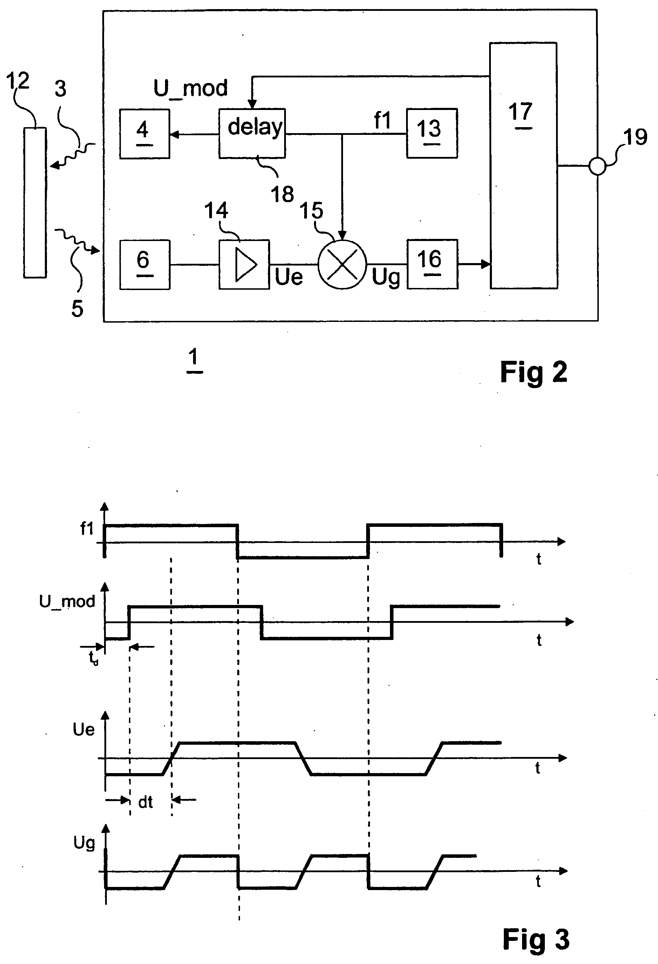

Figur 2 zeigt ein Blockschaltbild eines ersten Ausführungsbeispiels des Distanzsensors 1.

Dem Sender 4 ist ein Oszillator 13 vorgeordnet. Durch die im Oszillator 13 generierte, fest vorgegebene Frequenz $f_1$ werden die vom Sender 4 emittierenden Sendelichtstrahlen 3 mit der entsprechenden Frequenz $f_1$ moduliert. Dabei variiert die Spannung $U_{mod}$ am Eingang des Senders 4 periodisch mit der Frequenz $f_1$, wo-bei $U_{mod}$ vorzugsweise als Rechteckspannung ausgebildet ist. Dem Empfänger 6 ist ein Verstärker 14 nachgeordnet, in welchem die am Ausgang des Empfängers 6 anstehenden Empfangssignale verstärkt werden. Die verstärkten Empfangssignale $U_e$ werden ebenso wie ein Ausgang des Oszillators 13 einem Synchrongleichrichter 15 zugeführt. Die Ausgangssignale $U_g$ des Synchrongleichrichters 15 werden über einen Tiefpass 16 in eine Auswerteeinheit 17 eingelesen, die von einem Mikroprozessor gebildet ist. Über einen Ausgang der Auswerteeinheit 17 wird ein einstellbares, digitales Verzögerungsglied 18 angesteuert, welches zwischen dem Sender 4 und dem Oszillator 13 angeordnet ist.

Zur Ausgabe der Messergebnisse der Distanzmessung ist an die Auswerteeinheit 17 ein Signalausgang 19 angeschlossen. Der Signalausgang 19 kann als Analogausgang ausgebildet sein, über welchen die in der Auswerteeinheit 17 ermittelten Distanzwerte ausgegeben werden. Gemäß der Erfindung ist der Signalausgang 19 als binärer Schaltausgang ausgebildet, über welchen binäre Schaltsignale ausgegeben werden. Zur Generierung der Schaltsignale werden in der Auswerteeinheit 17 die ermittelten Distanzwerte wenigstens mit einem Schwellwert bewertet. Dadurch wird ein binäres Schaltsignal generiert, welches angibt, ob sich ein Objekt 12 in einem vorgegebenen Distanzbereich befindet oder nicht.

Die Arbeitsweise des Distanzsensors 1 wird im folgenden anhand von Figur 3 erläutert. Die mit der Mo-dulationsfrequenz $f_1$ modulierten Sendelichtstrahlen 3 werden in Richtung des Objekts 12 emittiert und als Empfangslichtstrahlen 5 zum Empfänger 6 reflektiert. Durch die Lichtlaufzeit der Sendelichtstrahlen 3 zum Objekt 12 und wieder zurück zum Empfänger 6 weisen die Emp-fangslichtstrahlen 5 eine Phasenverschiebung gegen-über $U_{mod}$ und damit der Frequenz des Oszillators 13 auf, die im Synchrongleichrichter 15 ermittelt wird.

Erfindungsgemäß wird in einem Regelkreis diese Phasenverschiebung auf einen fest vorgegebenen Wert geregelt. Dieser Wert der Phasenverschiebung ist so gewählt, dass der Mittelwert von $U_g$ am Ausgang des Synchrongleichrichters 15 zumindest näherungsweise den Wert null annimmt. Dieser Fall ist im unteren Diagramm von Figur 3 dargestellt.

Die Regelung der Phasenverschiebung erfolgt über die Auswerteeinheit 17. Hierzu wird in Abhängigkeit des aktuellen Werts von $U_g$ das Verzögerungsglied 18 angesteuert, so dass in diesem eine bestimmte Verzögerungszeit $t_d$ eingestellt wird, mit welchem die periodische Ansteuerung des Senders 4 mit $U_{mod}$ verzögert wird. Die Einregelung wird so lange fortgeführt, bis der Mittelwert von $U_g$ etwa den Wert null annimmt. Eine exakte Einstellung auf den Wert null ist im allgemeinen nicht möglich, da die im Verzögerungsglied 18 generierte Verzögerungszeit nur in diskreten Schritten einstellbar ist. Daher wird sowohl für positive als auch negative Werte von $U_g$ die Verzögerungszeit $t_d$ in Schritten so lange geändert, bis ein Vorzeichenwechsel von $U_g$ auftritt. Anschließend wird vorzugsweise zwischen den so erhaltenen Werten von $U_g$ interpoliert.

$U_g$ nimmt dann den Wert von etwa null an, wenn die laufzeitbedingte Verzögerung dt der Empfangslichtstrahlen 5 gegenüber dem Takt der Frequenz $f_1$ des Oszillators 13 sowie die Verzögerungszeit $t_d$ zusammen gerade die Phasenverschiebung der Empfangssignale $U_e$ und des Taktes des Oszillators 13 von 90° erzeugen. Dabei enthält dt die Verzögerungen durch die Lichtlaufzeit der Sende- 3 und Empfangslichtstrahlen 5 sowie sämtliche bauteilbedingten Verzögerungen. Durch diese Wahl von $t_d$ liefert nicht nur dt sondern auch die Verzögerungszeit $t_d$ des Verzögerungsglieds 18, ein direktes Maß für die Entfernung des Objekts 12. Damit kann in der Auswerteeinheit 17 bei einem fest vorgegebenen Arbeitspunkt des Synchrongleichrichters 15 durch eine einfache Bestimmung der Verzögerungszeit $t_d$ die Distanz des Objektes 12 bestimmt werden.

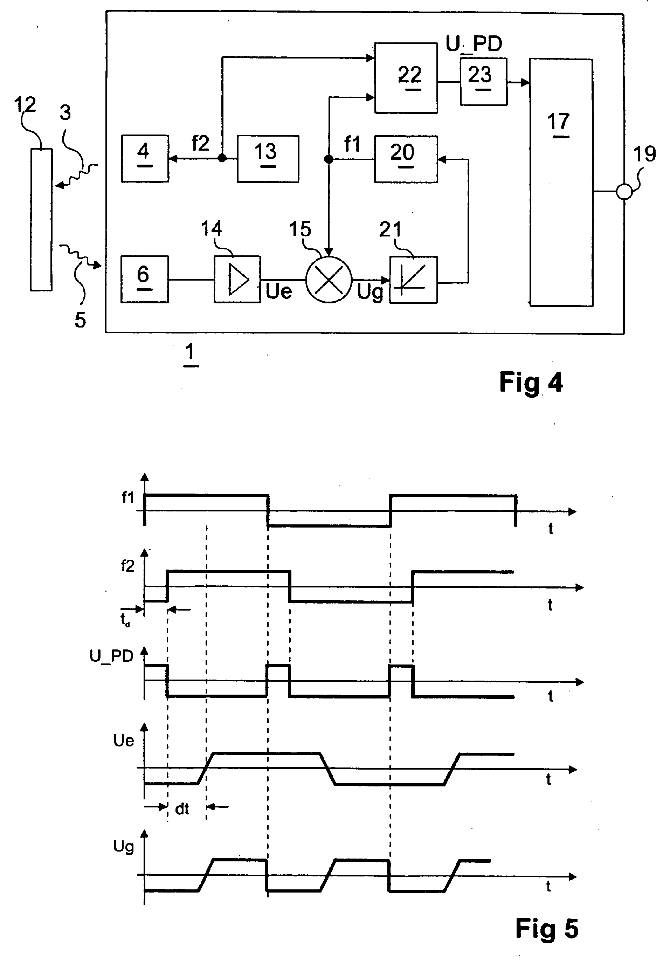

Figur 4 zeigt ein zweites Ausführungsbeispiel des Distanzsensors 1.

Der Sender 4 wird wiederum vom Oszillator 13 angesteuert, in welchem eine fest vorgegebene Frequenz $f_2$ erzeugt wird. Durch die dementsprechend periodisch variierende Spannung $U_{mod}$ am Eingang des Senders 4 werden die Sendelichtstrahlen 3 mit der Frequenz $f_2$ amplitudenmoduliert.

Die Empfangssignale am Ausgang des Empfängers 6 werden wiederum im Verstärker 14 verstärkt und dann dem Synchrongleichrichter 15 zugeführt.

Im Gegensatz zum Ausfijhrungsbeispiel gemäß Figur 2 wird in diesem Fall nicht das Ausgangssignal des Oszillators 13, sondern das Ausgangssignal eines separaten Taktoszillators 20 auf den Synchrongleichrichter 15 geführt. Der Taktoszillator 20 ist als VCO (voltage controlled oscillator) ausgebildet und erzeugt eine einstellbare Frequenz $f_1$, die gegenüber $f_2$ nur geringfügig abweicht.

Das Ausgangssignal $U_g$ des Synchrongleichrichters 15 wird einem Integrator 21 zugeführt und dann auf einen Eingang des Taktoszillators 20 rückgekoppelt. Die Ausgangssignale des Oszillators 13 und des Taktoszillators 20 werden einem Phasendetektor 22 zugeführt, der von einem Exklusiv-Oder-Glied gebildet ist.

Die Ausgangssignale $U_{PD}$ des Phasendetektors 22 werden über einen Tiefpass 23 in die Auswerteeinheit 17 eingelesen.

Wie aus Figur 5 ersichtlich, wird durch die Rückkopplung des Ausgangssignals $U_g$ des Synchrongleichrichters 15 auf den Taktoszillator 20 die Phasenverschiebung zwischen der Frequenz $f_1$ des Taktoszillators 20 und des verstärkten Empfangssignals $U_e$ durch Verändern von $f_1$ so eingeregelt, dass der Mittelwert von $U_g$ den Wert null annimmt.

Die dadurch erhaltene Phasenverschiebung zwischen $f_1$ und $f_2$ liefert dann entsprechend dem Ausführungsbeispiel gemäß den Figuren 2 und 3 ein direktes Maß für die Objektdistanz. Die Phasenverschiebung zwischen $f_1$ und $f_2$ wird im Phasendetektor 22 als Spannung $U_{PD}$ ermittelt, über den Tiefpass 23 in die Auswerteeinheit 17 eingelesen und dort ausgewertet. Dabei bildet der Tiefpass 23 im wesentlichen den Mittelwert der Spannung $U_{PD}$.

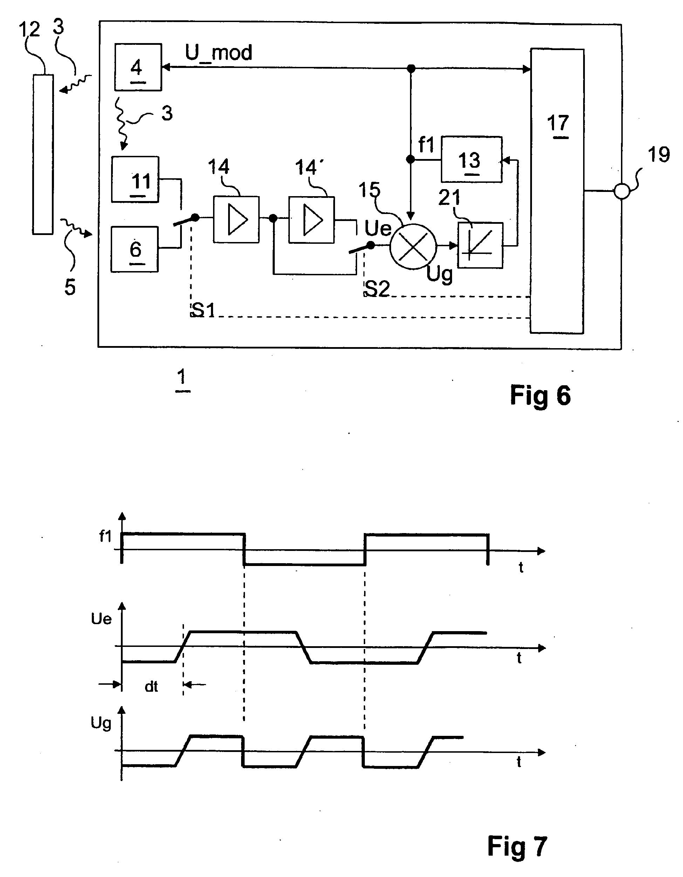

Figur 6 zeigt ein drittes Ausführungsbeispiel des Distanzsensors 1.

Die Empfangssignale des Empfängers 6 oder des Referenzempfängers 11 sind wahlweise über einen Schalter $S_1$ einer Verstärkerstufe bestehend aus zwei Verstärkern 14, 14' zuführbar. Der zweite Verstärker 14' der Verstärkerstufe ist über einen zweiten Schalter $S_2$ wahlweise zu- oder abschaltbar. Die Schalter $S_1$, $S_2$ werden über die Auswerteeinheit 17 angesteuert. Die verstärkten Empfangssignale $U_e$ werden wiederum dem Synchrongleichrichter 15 zugeführt.

Der Sender 4 wird wieder über den Oszillator 13 angesteuert. In diesem Fall ist der Oszillator 13 als VCO ausgebildet und erzeugt eine einstellbare Frequenz $f_1$. Die Spannung $U_{mod}$ variiert entsprechend der Frequenz $f_1$ des Oszillators 13, so dass die Sendelichtstrahlen 3 dementsprechend amplitudenmoduliert werden.

Die Ausgangssignale $U_g$ des Synchrongleichrichters 15 werden über den Integrator 21 auf den Oszillator 13 rückgekoppelt. Die Ausgangssignale des Oszillators 13 werden in die Auswerteeinheit 17 eingelesen.

Figur 7 zeigt die Arbeitsweise dieses Distanzsensors 1, wobei die Diagramme Signalverläufe zeigen, bei welcher entsprechend der Stellung des Schalters $S_1$ die Empfangssignale des Empfängers 6 auf die Verstärkerstufe geführt sind, in welcher der Schalter $S_2$ dauerhaft in einer vorgegebenen Schalterstellung verbleibt.

Durch die Rückkopplung des Ausgangssignals $U_g$ des Synchrongleichrichters 15 über den Integrator 21 auf den Oszillator 13 wird der Wert von $U_g$ wiederum so eingeregelt, dass dessen Mittelwert den Wert null annimmt.

Durch diesen Regelprozess wird die Frequenz $f_1$ des Oszillators 13 und damit die Modulation der Sendelichtstrahlen 3 eingestellt.

In diesem Fall liefert die eingestellte Frequenz $f_1$ ein Maß für die Objektdistanz, welche in der Auswerteeinheit 17 ermittelt wird.

Zur Kompensation von Alterungen von Bauteilen, Temperaturdriften und dergleichen, wird der Schalter $S_1$ periodisch umgeschaltet, so dass alternierend die Empfangssignale des Empfängers 6 und des Referenzempfängers 11 auf die Verstärkerstufe geführt sind.

Mit einer Referenzmessung, bei welcher die Randbereiche der Sendelichtstrahlen 3 als Streulicht definiert über die Blende 9 zum Referenzempfänger 11 geführt sind, können die vorgenannten Störeinflüsse kompensiert werden.

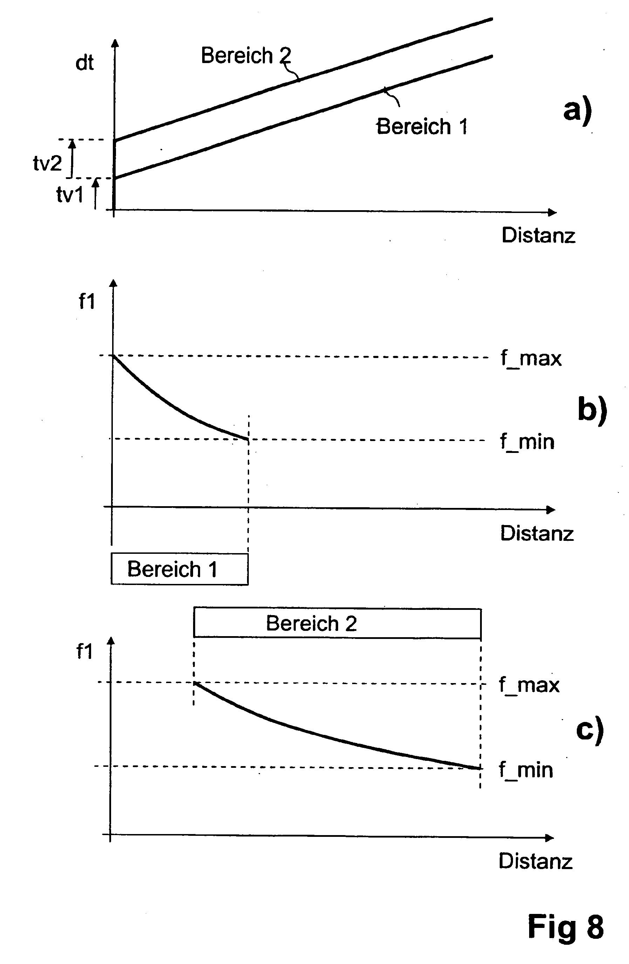

Durch Umschalten des Schalters $S_2$ kann der Distanzbereich, innerhalb dessen Objekte 12 erfassbar sind, variiert werden. Dies ist in den Figuren 8 a - c veranschaulicht.

In Figur 8 a sind die Distanzabhängigkeiten der laufzeitbedingten Verzögerungszeiten dt der Empfangslichtstrahlen 5 für den Fall, dass nur der Verstärker 14 aktiviert ist und für den Fall, dass beide Verstärker 14, 14' über $S_2$ aktiviert sind, aufgetragen. Dabei bildet $t_{v1}$ die Laufzeitverzögerung durch den ersten Verstärker 14 und $t_{v2}$ die Laufzeitverzögerung des Verstärkers 14'. Daraus ist ersichtlich, dass durch die im Verstärker 14' zusätzlich bewirkte Verzögerung $t_{v2}$ ein entsprechend größerer Wert für dt erhalten wird.

In den Figuren 8b und 8c ist jeweils die maximale Frequenz $f_{max}$ und die minimale Frequenz $f_{min}$ dargestellt, die im Oszillator 13 einstellbar ist. Durch die Größe des Intervalls $f_{max}$ - $f_{min}$ ist der Distanzbereich innerhalb dessen Objekte 12 erfassbar sind, begrenzt, da nur in diesem Intervall die Frequenz $f_1$ des Oszillators 13 streng monoton mit steigender Objektdistanz abnimmt und somit ein Maß für die Objektdistanz liefert.

In Figur 8b ist der Fall dargestellt, dass in der Verstärkerstufe nur der erste Verstärker 14 aktiviert ist. Zudem sind die Phasenlagen der Sendelichtstrahlen 3 in den Empfangssignalen $U_e$ so gewählt, dass diese einen Phasenunterschied von 90° aufweisen, bei welchem der Mittelwert von $U_g$ den Wert null annimmt. Für die Einstellung wird der in Figur 8 b dargestellte distanzabhängige Frequenzgang von $f_1$ erhalten, so dass entsprechend Objekte 12 in einem mit "Bereich 1" gekennzeichneten Distanzbereich erfassbar sind.

In Figur 8c ist der Fall dargestellt, dass beide Verstärker 14, 14' der Verstärkerstufen aktiviert sind. Zudem ist gegenüber dem Ausführungsbeispiel gemäß Figur 8b das dem Synchrongleichrichter 15 zugeführte Ausgangssignal des Oszillators 13 oder das verstärkte Empfangssignal invertiert. Dementsprechend stellt sich der Mittelwert von $U_g$ erst dann auf den Wert null ein, wenn die Phasendifferenz der Eingangssignale des Synchrongleichrichters 15 270° beträgt. Dementsprechend wird der in Figur 8c dargestellte distanzabhängige Verlauf von $f_1$ erhalten, so dass nun Objekte 12 innerhalb des mit "Bereich 2" gekennzeichneten Distanzbereich erfassbar sind, welcher gegenüber dem Bereich 1 zu größeren Distanzen verschoben ist.

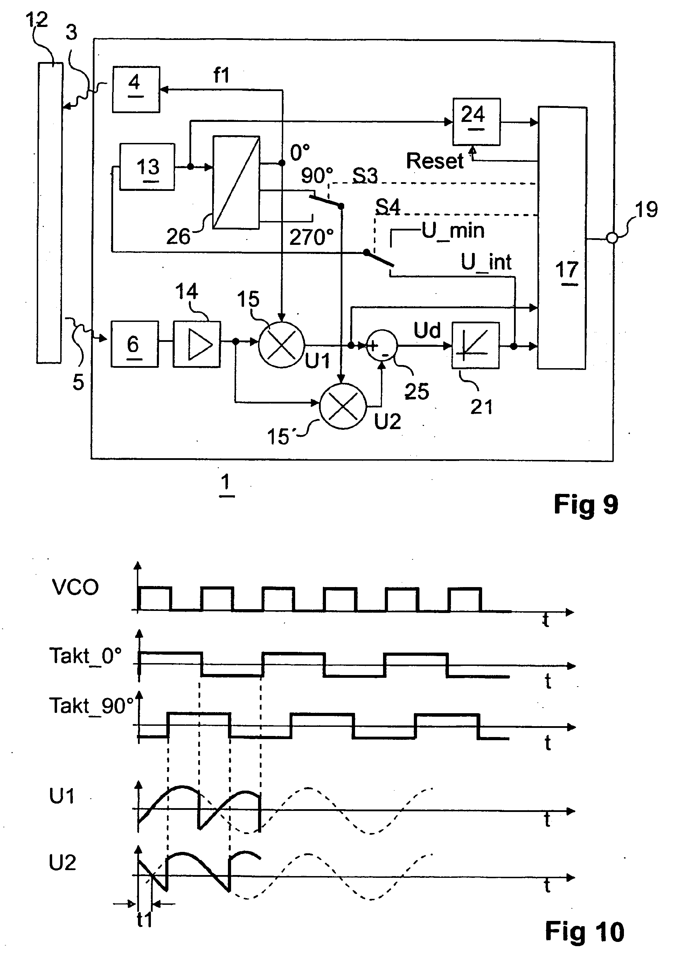

Figur 9 zeigt ein weiteres Ausführungsbeispiel des Distanzsensors 1, welches eine Erweiterung des Ausführungsbeispiels gemäß Figur 7 darstellt.

Der Sender 4 wird wiederum vom Oszillator 13 angesteuert, welcher als VCO ausgebildet ist, so dass die Sendelichtstrahlen 3 mit einer Frequenz $f_1$ amplitudenmoduliert werden.

Zudem wird mit der Frequenz $f_1$ des Oszillators 13 ein Zähler 24 angesteuert, dessen Ausgang auf die Auswerteeinheit 17 geführt ist. Über einen Ausgang der Auswerteeinheit 17 ist der Zähler 24 über ein Resetsignal (Reset) rücksetzbar.

Die Empfangssignale des Empfängers 6 werden im Verstärker 14 verstärkt und dann zwei Synchrongleichrichtern 15, 15' zugeführt.

Die Ausgangssignale $U_1$, $U_2$ der beiden Synchrongleichrichter 15, 15' werden einem Subtrahierer 25 zugeführt, in welchem die Differenz

$$U_d = U_1 - U_2$$

der Ausgangssignale $U_1$, $U_2$ der Synchrongleichrichter 15, 15' gebildet wird. Das so gebildete Differenzsignal $U_d$ wird über den Integrierer 21 der Auswerteeinheit 17 zugeführt.

Dem Oszillator 13 ist ein Frequenzteiler 26 nachgeordnet, in welchem durch Frequenzteilung Taktsignale erzeugt werden, die bezüglich der Frequenz $f_1$ des Oszillators 13 von 0°, 90°, 270° phasenverschoben sind.

Das Taktsignal mit 0° Phasenverschiebung wird auf den ersten Synchrongleichrichter 15 geführt. Über einen Schalter $S_3$, der von der Auswerteeinheit 17 gesteuert ist, wird wahlweise das Taktsignal mit 90° oder mit 270° Phasenverschiebung dem zweiten Synchrongleichrichter 15' zugeführt.

Über einen ebenfalls von der Auswerteeinheit 17 gesteuerten Schalter $S_4$ wird der Oszillator 13 wahlweise mit einer festen Spannung $U_{min}$ angesteuert oder das integrierte Differenzsignal $U_d$ auf den Eingang des Oszillators 13 rückgekoppelt.

Die Arbeitsweise des Distanzsensors 1 gemäß Figur 9 ist in Figur 10 veranschaulicht.

Die Frequenz $f_1$ des Oszillators 13 wird durch die Rückkopplung von $U_d$ auf den Oszillator 13 so eingeregelt, dass der Mittelwert des Differenzsignals den Wert null annimmt. Die so eingestellte Frequenz gibt ein Maß für die Objektdistanz. Die Frequenz $f_1$ wird durch Zählen der Perioden des Oszillatorsignals im Zähler 24 bestimmt und in der Auswerteeinheit 17 in einen Distanzwert umgerechnet.

Da im Gegensatz zum Ausführungsbeispiel gemäß Figur 7 die Differenz der Ausgangssignale zweier Synchrongleichrichter 15, 15' zur Einstellung von $f_1$ ver-

wendet wird, können bauteilbedingte Störeinflüsse eliminiert werden.

Durch die Umschaltung des Schalters $S_3$ kann analog zum Ausführungsbeispiel gemäß Figur 7 der Distanzbereich, innerhalb dessen Objekte 12 erfassbar sind, variiert werden.

Durch vorzugsweise zyklisches Umschalten des Schalters $S_4$ auf $U_{min}$ wird der Oszillator 13 bei seiner Minimalfrequenz betrieben. Hierdurch kann eine Kontrolle des Mindestpegels von $U_1$ erfolgen, wobei im fehlerfreien Betrieb folgende Bedingungen erfüllt sind: $U_1$ muss größer als $U_{min}$ sein und für die Spannung $U_{int}$ am Ausgang des Integrators 21 muss gelten $U_{int} > 0$.

Bei dem Ausführungsbeispiel gemäß Figur 10 wird das Empfangssignal an den Eingängen der Synchrongleichrichter 15, 15' mit den Flanken des 0°-Taktsignals bzw. 90°-Taktsignals multipliziert. Dadurch nimmt der Mittelwert von $U_d$ dann den Wert null an, wenn eine Phasenverschiebung zwischen Empfangssignal und dem 0° Taktsignal von 45° vorliegt.

Für den Fall, dass der zweite Synchrongleichrichter 15' anders als in Figur 10 dargestellt nicht mit dem 90°-Taktsignal, sondern dem 270°-Taktsignal angesteuert wird, nimmt der Mittelwert von $U_d$ dann den Wert null an, wenn eine Phasenverschiebung $t_1$ zwischen Empfangssignal und dem 0° Taktsignal von 135° vorliegt.

Bezugszeichenliste

(1)    Distanzsensor
(2)    Gehäuse
(3)    Sendelichtstrahlen
(4)    Sender
(5)    Empfangslichtstrahlen
(6)    Empfänger
(7)    Sendeoptik
(8)    Fassung
(9)    Blende
(10)   Empfangsoptik
(11)   Referenzempfänger
(12)   Objekt
(13)   Oszillator
(14)   Verstärker
(14')  Verstärker
(15)   Synchrongleichrichter
(15')  Synchrongleichrichter
(16)   Tiefpass
(17)   Auswerteeinheit
(18)   Verzögerungsglied
(19)   Signalausgang
(20)   Taktoszillator
(21)   Integrator
(22)   Phasendetektor
(23)   Tiefpass
(24)   Zähler
(25)   Subtrahierer

(26)   Frequenzteiler

($S_1$)   Schalter
($S_2$)   Schalter
($S_3$)   Schalter
($S_4$)   Schalter

**Patentansprüche**

1. Optischer Distanzsensor mit einem Sendelichtstrahlen emittierenden Sender, wenigstens einem Oszillator zur Modulation der Sendelichtstrahlen, einem Empfangslichtstrahlen empfangenden Empfänger und Mitteln zur Bestimmung der Laufzeit der von einem Objekt reflektierten Empfangslichtstrahlen, wobei die Phasenverschiebung zwischen Sende- (3) und Empfangslichtstrahlen (5) auf einen vorgegebenen Wert geregelt ist, **dadurch gekennzeichnet, dass** zur Generierung binärer Schaltsignale die ermittelten Distanzwerte mit einem Schwellwert bewertet werden, welche binären Schaltsignalen angeben, ob sich ein Objekt in seinem vorgegebenen Distanzbereich befindet oder nicht.

2. Distanzsensor nach Anspruch 1, **dadurch gekennzeichnet, dass** zur Bestimmung der Phasenverschiebung zwischen Sende- (3) und Empfangslichtstrahlen (5) wenigstens ein Synchrongleichrichter (15) vorgesehen ist, welchem die am Ausgang des Empfängers (6) anstehenden Empfangssignale und die Ausgangssignale des den Sender (4) modulierenden Oszillators (13) oder eines Taktoszillators (20), dessen Frequenz im wesentlichen mit der Frequenz des den Sender (4) modulierenden Oszillators (13) übereinstimmt, zugeführt werden.

3. Distanzsensor nach Anspruch 2, **dadurch gekennzeichnet, dass** der Oszillator (13) und/oder der Taktoszillator (20) von einem spannungsgeregelten Oszillator (VCO) gebildet ist.

4. Distanzsensor nach einem der Ansprüche 2 oder 3, **dadurch gekennzeichnet, dass** die Phasenverschiebung zwischen Sende- (3) und Empfangslichtstrahlen (5) auf einen Wert eingeregelt ist, bei welchem der Mittelwert des Ausgangssignals $U_g$ des Synchrongleichrichters (15) den Wert null annimmt.

5. Distanzsensor nach einem der Ansprüche 2 bis 4, **dadurch gekennzeichnet, dass** die Bestimmung der Objektdistanz in einer Auswerteeinheit (17) erfolgt.

6. Distanzsensor nach einem der Ansprüche 1 bis 5, **dadurch gekennzeichnet, dass** zur Regelung der Phasenverschiebung zwischen Sende- (3) und Empfangslichtstrahlen (5) ein auf den Sender (4) wirkendes, einstellbares Verzögerungsglied (18) vorgesehen ist.

7.  Distanzsensor nach Anspruch 6, **dadurch gekennzeichnet, dass** das Verzögerungsglied (18) dem Oszillator (13) nachgeordnet und dem Sender (4) vorgeordnet ist.

8.  Distanzsensor nach einem der Ansprüche 6 oder 7, **dadurch gekennzeichnet, dass** das Ausgangssignal $U_g$ des Synchrongleichrichters (15) in die Auswerteeinheit (17) eingelesen wird, und dass in Abhängigkeit des aktuellen Wertes von $U_g$ das Verzögerungsglied (18) über die Auswerteeinheit (17) eingestellt wird.

9.  Distanzsensor nach einem der Ansprüche 6 bis 8, **dadurch gekennzeichnet, dass** die im Verzögerungsglied (18) eingestellte Verzögerungszeit $t_d$ als Maß für die Objektdistanz ausgewertet wird.

10. Distanzsensor nach einem der Ansprüche 2 bis 5, **dadurch gekennzeichnet, dass** der Sender (4) durch den diesen vorgeordneten Oszillator (13) mit einer konstanten Frequenz $f_2$ moduliert ist, und dass der Ausgang des Taktoszillators (20) auf den Synchrongleichrichter (15) geführt ist, wobei die Frequenz $f_1$ des Taktoszillators (20) durch Rückkopplung des Ausgangssignals $U_g$ des Synchrongleichrichters (15) einstellbar ist.

11. Distanzsensor nach Anspruch 10, **dadurch gekennzeichnet, dass** das Ausgangssignal $U_g$ des Synchrongleichrichters (15) in einem Integrator (21) integriert wird.

12. Distanzsensor nach einem der Ansprüche 10 oder 11, **dadurch gekennzeichnet, dass** in einem Phasendetektor (22) die Phasendifferenz zwischen den Signalen des Oszillators (13) und des Taktoszillators (20) bestimmt und in der Auswerteeinheit (17) als Maß für die Objektdistanz ausgewertet wird.

13. Distanzsensor nach Anspruch 12, **dadurch gekennzeichnet, dass** der Phasendetektor (22) von einem Exklusiv-Oder-Glied gebildet ist.

14. Distanzsensor nach einem der Ansprüche 12 oder 13, **dadurch gekennzeichnet, dass** dem Phasendetektor (22) ein Tiefpass (23) nachgeordnet ist, dessen Ausgangssignal in die Auswerteeinheit (17) eingelesen wird.

15. Distanzsensor nach einem der Ansprüche 1 bis 5, **dadurch gekennzeichnet, dass** zur Bestimmung der Phasenverschiebung zwischen Sende- (3) und Empfangslichtstrahlen (5) die Modulationsfrequenz der Sendelichtstrahlen (3) einstellbar ist.

16. Distanzsensor nach Anspruch 15, **dadurch gekennzeichnet, dass** zur Einstellung der Modulationsfrequenz auf den dem Sender (4) vorgeordneten Oszillator (13) das integrierte Ausgangssignal $U_g$ des Synchrongleichrichters (15) rückgekoppelt ist.

17. Distanzsensor nach Anspruch 16, **dadurch gekennzeichnet, dass** die im Oszillator (13) eingestellte Modulationsfrequenz in der Auswerteeinheit (17) als Maß für die Objektdistanz ausgewertet wird.

18. Distanzsensor nach einem der Ansprüche 15 bis 17, **dadurch gekennzeichnet, dass** dem Empfänger (6) zwei Verstärker (14, 14') nachgeordnet sind, wobei der zweite Verstärker (14') über einen Schalter $S_2$ zur Variation des Distanzbereichs zu- oder abschaltbar ist.

19. Distanzsensor nach Anspruch 18, **dadurch gekennzeichnet, dass** zur Variation des Distanzbereichs das dem Synchrongleichrichter (15) zugeführte Ausgangssignal des Oszillators (13) oder das Empfangssignal des Empfängers (6) invertierbar ist.

20. Distanzsensor nach einem der Ansprüche 1 bis 19, **dadurch gekennzeichnet, dass** dieser einen Referenzempfänger (11) aufweist, auf welchen Streulicht des Senders (4) eingekoppelt ist.

**Claims**

1.  Optical distance sensor with a transmitter emitting transmitted light beams, at least one oscillator for modulation of the transmitted light beams, a receiver receiving received light beams and means for determining the transit time of the received light beams reflected from an object, wherein the phase displacement between transmitted light beams (3) and received light beams (5) is regulated to a predetermined value, **characterised in that** for generation of binary switching signals the ascertained distance values are weighted by a threshold value, which binary switching signals indicate whether or not an object is located in a predetermined distance range.

2.  Distance sensor according to claim 1, **characterised in that** for determination of the phase displacement between transmitted light beams (3) and received light beams (5) at least one synchronous rectifier (15) is provided, to which are fed the received signals, which are present at the output of the receiver (6), and the output signals of the oscillator (13), which modulates the transmitter (4), or of a clock oscillator (20), the frequency of which substantially corresponds with the frequency of the oscillator (13) modulating the transmitter (4).

**3.** Distance sensor according to claim 2, **characterised in that** the oscillator (13) and/or the clock oscillator (20) is or are formed by a voltage-regulated oscillator (VCO).

**4.** Distance sensor according to one of claims 2 and 3, **characterised in that** the phase displacement between transmitted light beams (3) and received light beams (5) is regulated to a value at which the mean value of the output signal $U_g$ of the synchronous rectifier (15) adopts the value zero.

**5.** Distance sensor according to one of claims 2 to 4, **characterised in that** the determination of the object distance is carried out in an evaluating unit (17).

**6.** Distance sensor according to one of claims 1 to 5, **characterised in that** a settable delay element (18) acting on the transmitter (4) is provided for regulation of the phase displacement between transmitted light beams (3) and received light beams (5).

**7.** Distance sensor according to claim 6, **characterised in that** the delay element (18) is arranged downstream of the oscillator (13) and upstream of the transmitter (4).

**8.** Distance sensor according to one of claims 6 and 7, **characterised in that** the output signal $U_g$ of the synchronous rectifier (15) is read into the evaluating unit (17) and that the delay element (18) is set by way of the evaluating unit (17) in dependence on the instantaneous value of $U_g$.

**9.** Distance sensor according to one of claims 6 to 8, **characterised in that** the delay time $t_d$ set in the delay element (18) is evaluated as a measure for the object distance.

**10.** Distance sensor according to one of claims 2 to 5, **characterised in that** the transmitter (4) is modulated at a constant frequency $f_2$ by the oscillator (13) arranged upstream thereof and that the output of the clock oscillator (20) is led to the synchronous rectifier (15), wherein the frequency $f_1$ of the clock oscillator (20) is settable by feedback of the output signal $U_g$ of the synchronous rectifier (15).

**11.** Distance sensor according to claim 10, **characterised in that** the output signal $U_g$ of the synchronous rectifier (15) is integrated in an integrator (21).

**12.** Distance sensor according to one of claims 10 and 11, **characterised in that** the phase difference between the signals of the oscillator (13) and the clock oscillator (20) is determined in a phase detector (22) and is evaluated in the evaluating unit (17) as a measure for the object distance.

**13.** Distance sensor according to claim 12, **characterised in that** the phase detector (22) is formed by an exclusive OR element.

**14.** Distance sensor according to one of claims 12 and 13, **characterised in that** a lowpass filter (23), the output signal of which is read into the evaluating unit (17), is arranged downstream of the phase detector (22).

**15.** Distance sensor according to one of claims 1 to 5, **characterised in that** the modulation frequency of the transmitted light beams (3) is settable for determination of the phase displacement between transmitted light beams (3) and received light beams (5).

**16.** Distance sensor according to claim 15, **characterised in that** for setting the modulation frequency the integrated output signal $U_g$ of the synchronous rectifier (15) is fed back to the oscillator (13) arranged upstream of the transmitter (4).

**17.** Distance sensor according to claim 16, **characterised in that** the modulation frequency set in the oscillator (13) is evaluated in the evaluating unit (17) as a measure for the object distance.

**18.** Distance sensor according to one of claims 15 to 17, **characterised in that** two amplifiers (14, 14') are arranged downstream of the receiver (6), wherein the second amplifier (14, 14') is switchable on or switchable off by way of a switch $S_2$ or variation of the distance range.

**19.** Distance sensor according to claim 18, **characterised in that** the output signal of the oscillator (13) fed to the synchronous rectifier (15) or the received signal of the receiver (6) can be inverted for variation of the distance range.

**20.** Distance sensor according to one of claims 1 to 19, **characterised in that** this comprises a reference receiver (11) at which the diffused light of the transmitter (4) is coupled in.

**Revendications**

**1.** Capteur de distance optique comprenant un émetteur émettant des rayons lumineux d'émission, au moins un oscillateur pour moduler les rayons lumineux d'émission, un récepteur recevant des rayons lumineux de réception et des moyens pour déterminer le temps de parcours des rayons lumineux de réception réfléchis par un objet, dans lequel le déphasage entre rayons lumineux d'émission (3) et de réception (5) est réglé à une valeur prédéfinie, **caractérisé par le fait que** les valeurs de distance déterminées sont évaluées à l'aide d'une valeur seuil pour générer des signaux de commutation binaires, lesquels signaux de commutation binaires indiquent si un objet se trouve ou non dans sa plage de distance prédéfinie.

2. Capteur de distance selon la revendication 1, **caractérisé par le fait que** pour déterminer le déphasage entre rayons lumineux d'émission (3) et de réception (5), il est prévu au moins un redresseur synchrone (15) auquel sont amenés les signaux de réception apparaissant à la sortie du récepteur (6) et les signaux de sortie de l'oscillateur (13) modulant l'émetteur (4) ou d'un oscillateur d'horloge (20) dont la fréquence concorde essentiellement avec la fréquence de l'oscillateur (13) modulant l'émetteur (4).

3. Capteur de distance selon la revendication 2, **caractérisé par le fait que** l'oscillateur (13) et/ou l'oscillateur d'horloge (20) est formé d'un oscillateur commandé en tension (VCO).

4. Capteur de distance selon l'une des revendications 2 ou 3, **caractérisé par le fait que** le déphasage entre rayons lumineux d'émission (3) et de réception (5) est réglé à une valeur à laquelle la moyenne du signal de sortie $U_g$ du redresseur synchrone (15) prend la valeur nulle.

5. Capteur de distance selon l'une des revendications 2 à 4, **caractérisé par le fait que** la détermination de la distance de l'objet est réalisée dans une unité d'évaluation (17).

6. Capteur de distance selon l'une des revendications 1 à 5, **caractérisé par le fait qu'**il est prévu un élément de retard (18) réglable agissant sur l'émetteur (4) pour régler le déphasage entre rayons lumineux d'émission (3) et de réception (5).

7. Capteur de distance selon la revendication 6, **caractérisé par le fait que** l'élément de retard (18) est placé après l'oscillateur (13) et avant l'émetteur (4).

8. Capteur de distance selon l'une des revendications 6 ou 7, **caractérisé par le fait que** le signal de sortie $U_g$ du redresseur synchrone (15) est chargé dans l'unité d'évaluation (17) et que l'élément de retard (18) est réglé par l'unité d'évaluation (17) en fonction de la valeur actuelle de $U_g$.

9. Capteur de distance selon l'une des revendications 6 à 8, **caractérisé par le fait que** le temps de retard $t_d$ réglé dans l'élément de retard (18) est évalué en tant que mesure de la distance de l'objet.

10. Capteur de distance selon l'une des revendications 2 à 5, **caractérisé par le fait que** l'émetteur (4) est modulé par une fréquence constante $f_2$ par l'oscillateur (13) placé avant lui et que la sortie de l'oscillateur d'horloge (20) est amenée au redresseur synchrone (15), la fréquence $f_1$ de l'oscillateur d'horloge (20) étant réglable par réinjection du signal de sortie $U_g$ du redresseur synchrone (15).

11. Capteur de distance selon la revendication 10, **caractérisé par le fait que** le signal de sortie $U_g$ du redresseur synchrone (15) est intégré dans un intégrateur (21).

12. Capteur de distance selon l'une des revendications 10 ou 11, **caractérisé par le fait que** la différence de phase entre les signaux de l'oscillateur (13) et de l'oscillateur d'horloge (20) est déterminée dans un détecteur de phase (22) et évaluée dans l'unité d'évaluation (17) en tant que mesure de la distance de l'objet.

13. Capteur de distance selon la revendication 12, **caractérisé par le fait que** le détecteur de phase (22) est formé d'un élément OU exclusif.

14. Capteur de distance selon l'une des revendications 12 ou 13, **caractérisé par le fait qu'**un filtre passe-bas (23) dont le signal de sortie est chargé dans l'unité d'évaluation (17) est placé après le détecteur de phase (22).

15. Capteur de distance selon l'une des revendications 1 à 5, **caractérisé par le fait que** pour déterminer le déphasage entre rayons lumineux d'émission (3) et de réception (5), la fréquence de modulation des rayons lumineux d'émission (3) est réglable.

16. Capteur de distance selon la revendication 15, **caractérisé par le fait que** pour régler la fréquence de modulation sur l'oscillateur (13) placé avant l'émetteur (4), le signal de sortie $U_g$ intégré du redresseur synchrone (15) est réinjecté.

17. Capteur de distance selon la revendication 16, **caractérisé par le fait que** la fréquence de modulation réglée dans l'oscillateur (13) est évaluée dans l'unité d'évaluation (17) en tant que mesure de la distance de l'objet.

18. Capteur de distance selon l'une des revendications 15 à 17, **caractérisé par le fait que** deux amplificateurs (14, 14') sont placés après le récepteur (6), le deuxième amplificateur (14') pouvant être mis en ou hors circuit au moyen d'un commutateur $S_2$ pour faire varier la plage de distance.

19. Capteur de distance selon la revendication 18, **caractérisé par le fait que** le signal de sortie de l'oscillateur (13) amené au redresseur synchrone (15) ou le signal de réception du récepteur (6) est inversible pour faire varier la plage de distance.

20. Capteur de distance selon l'une des revendications 1 à 19, **caractérisé par le fait que** celui-ci présente un récepteur de référence (11) sur lequel est couplée de la lumière diffuse de l'émetteur (4).

**Fig 1a**

**Fig 1b**

**Fig 1c**

12 3

U_mod

| 4 | ← | delay | ← | | f1 | 13 | | 17 | ○ 19 |

18

14   15

| 6 | → | ▷ | Ue | ⊗ | Ug | 16 | → |

5

1

**Fig 2**

f1
t

U_mod
t
t₀

Ue
t
dt

Ug
t

**Fig 3**

**Fig 4**

**Fig 5**

Fig 6

Fig 7

dt

Bereich 2

Bereich 1

a)

tv2

tv1

Distanz

f1

f_max

b)

f_min

Distanz

Bereich 1

Bereich 2

f1

f_max

c)

f_min

Distanz

Fig 8

**Fig 9**

**Fig 10**